# EUROPEAN PATENT APPLICATION

(11) **EP 1 757 189 A2**
(43) Date of publication of application: **28.02.2007**
(21) Application number: 06118952.8
(22) Date of filing: 15.08.2006
(51) Int. Cl.: A23C 21/10, A23C 1/16, A23C 19/076, A23C 9/154, A23J 3/08, B01D 61/44, A23C 19/10, A23C 3/08, A23L 3/358, A23L 1/39, A23L 1/24, A21D 2/02, A23J 3/04

(54) **Shelf-Stable acidified food compositions and methods for their preparation**

(30) Priority: 23.08.2005 US 208738
(71) Applicant: KRAFT FOODS HOLDINGS, INC., Northfield, Illinois 60093 (US)
(72) Inventor: Cha, Alice S., Northbrook, IL Illinois 60062 (US); Loh, Jimbay P., Green Oaks, IL Illinois 60048 (US); Crowley, Colin P., Wheeling, IL Illinois 60090 (US)
(74) Representative: Smaggasgale, Gillian Helen

(57) **Abstract**

Low pH, high moisture, shelf stable food composition with reduced sourness and methods of making them are provided. The food composition is acidified with a low sourness acidulent having an acidifying power of at least about 0.005 mole/liter per gram of the acidulant at pH 4.0 in amount effective for providing a food composition having an Aw of about 0.90 or greater with a final pH of 5.0 or less, and particularly 4.2 or less. The low pH food composition particularly may contain total organic acids content of 0.22 moles per 1,000 grams of food composition or less, which aids in avoiding undue sourness. New or improved low pH, high-moisture shelf stable food components and products with reduced sourness, and their methods of preparation, are also provided, induding in one aspect an improved electrodialysis method and system for preparing ED compositions useful for food preparation.

## Description

The present application claims priority to United States Patent Application Number 11/208,738, filed 23 August 2005, which is hereby incorporated by reference in its entirety.

The present invention is directed to shelf-stable food compositions and methods for their preparation. Particularly, food compositions are prepared with acidified dairy proteins, electrodialyzed compositions, and/or inorganic acids in amounts effective for providing a low pH, high moisture food composition with enhanced shelf-stability and acceptable taste and organoleptic properties. More particularly, the food compositions of this invention are high moisture, shelf-stable products acidified to very low pH in the substantial absence of organic acid amounts which impart undesired acidic bite, off-flavors and/or other undesirable organoleptic properties.

### BACKGROUND

Food manufacturers produce finished food products which ideally are both organoleptically-pleasing but also sufficiently shelf-stable. In general, food preservation has been generally approached in the past, for instance, via direct acidulation, thermal treatment, chemical preservatives, hydrostatic treatment, refrigeration and combinations thereof. The challenge that is often faced is improving shelf life without diminishing the desirable sensory attributes, and thus the commercial value, of the food.

Food processing often requires pH adjustments to obtain desired product stabilities. The direct addition of organic food acidulants (such as acetic acid or lactic acid) inevitably leads to significant (often negative) alterations in taste in such acidified foods. Low pH products may also result in undesirable precipitates which detract from the organoleptic quality of the food and make additional processing more difficult.

One alternative to adding organic food acidulants to foods is to use compositions generated by electrolysis and/or electrodialysis. Electrodialysis (ED) is used in connection with the separation of dissolved salts or other naturally occurring impurities from one aqueous solution to another aqueous solution. The separation of these dissolved salts or other impurities results from ion migration through semi-permeable, ion-selective membranes under the influence of an applied electric field that is established between a cathode (negative potential electrode) and an anode (positive potential electrode). The membranes may be selective for monovalent or multivalent ions depending on whether separation is desired between monovalent or multivalent cations and/or anions. The separation process results in a salt or impurity concentrated stream (known as a concentrate or brine) and in a salt or impurity depleted stream (known as a diluate). The concentrate and diluate streams flow in solution compartments in the electrodialysis apparatus that are disposed between the anode and cathode and that are separated by alternating cation and anion selective membranes. The outer most compartments adjacent the anode and cathode electrodes have a recirculating electrode-rinse solution flowing therethrough to maintain the cathode and anode electrodes clean.

Low cost, high quality dairy products are largely unavailable in shelf stable form. Processes such as retort treatment or aseptic packaging have been used to prepare shelf stable dairy products; these processes are, however, very costly. Others use intermediate moisture preservation technology mainly depending on the use of humectants (e.g. glycerol) and preservatives (e.g. high salt, sorbic acid) which yield high solid, inferior products (e.g. rubbery or candy-like texture, unacceptable taste). Use of acidification with organic acid to provide a shelf stable dairy product leads to problems which may include (1) isoelectric precipitation of casein leading to grainy texture, emulsion breakdown, etc. and (2) most importantly unacceptable sour taste.

The sourness intensity or acidic bite of low pH (high acidity) food products makes them generally less attractive for direct consumption in quantity (e.g. lemon juice). Perceived sourness intensity generally is inversely proportional to the pH of acidic food products that are acidified with conventional acidulants (e.g., acetic acid, lactic acid, citric acid). Some highly acidic foods are also heavily sweetened to counter the intense sourness (e.g., lemonade). Others are formulated with high fat content and/or with high salt content. In some cases, those acidified products are only stable under refrigeration condition. For instance, in milder or dairy product based salad dressings, such as ranch, creamy cucumber and buttermilk flavored dressings, etc. at very low pH (e.g. <3.5), the sour flavor imparted by a traditional acetic acid preservation system provides a less desirable product from an organoleptic standpoint as the acidic bite imparted may be objectionable to many consumers. The sourness imparted to mild or dairy product based salad dressings becomes even more critical in reduced-calorie formulations partially due to high buffering capacity of these dairy-based products.

Food products also have been significantly thermally processed (e.g., pasteurized, or receive a a more extreme thermal treatment such as retort) to provide shelf stability. Thermal processing potentially complicates production, degrades nutrition value and adds to production costs. In addition, heat sensitive food products in particular may not tolerate pasteurization or other significant heat treatment used to stabilize the food composition without sacrificing desirable sensory attributes thereof, e.g., taste, mouthfeel, texture, color, odor or lack thereof, etc. For instance, certain widely used non-sweetened foods containing a dairy product (e.g., milk, cheese, butter, cream, dairy proteins, etc.), such as some salad dressings, dips, spreads, sauces, fall under this category, as undesirable or diminished desirable flavor and/or mouthfeel, etc., results from a significant heat treatment thereof.

New and simple methods are desired for the preparation of shelf-stable, acidified high moisture food compositions without undesirable sour off-taste, which do not require high temperature treatment and/or high addition rates of sweeteners, fat, sodium salt, or other preservation agents.

### SUMMARY

The present invention is broadly directed to methods for acidifying high moisture food compositions which are effective for enhancing their shelf-stability while not introducing a sour taste or adversely effecting organoleptic properties of the food compositions. Acidification of the food compositions is effected by addition of non-sour acidulants. These may be selected from an electrodialyzed composition (ED), edible inorganic acids, edible metal acid salts of inorganic acids, highly acidified food ingredients such as acidified dairy protein, acidified soy protein, acidified egg albumin, acidified grain protein, or combinations of these. One or more of these kinds of acidulants are used for significantly lowering pH of a food composition to a more shelf-stable form instead of using sour organic acids for that purpose.

In one embodiment, a method is provided for making a low-pH, high-moisture shelf-stable food composition with reduced sourness by combining a food with a low sourness acidulant having an acidifying power of at least about 0.005 mole/liter per gram of the acidulant at pH 4.0 in an amount effective for providing a food composition having a water activity (Aw) of about 0.90 or greater with a final pH of 5.0 or less, particularly 4.6 or less, and more particularly 4.2 or less. In particular embodiments the low sourness acidulant has an acidifying power of at least about 0.01 male/liter per gram of the acidulant at pH 4.0, more particularly at least about 0.1 mole/liter per gram of the acidulant at pH 4.0, and may range from about 0.01 to about 0.5 mole/liter per gram of the acidulant at pH 4.0 Non-limiting examples of the low pH, high-moisture, shelf-stable food compositions which can be prepared with reduced sourness in accordance with embodiments of this invention include, for example, sauces, gravies, spreads, dips, dressings, salads, vegetables, starches, meats, sea foods, cereals, baked goods, fillings, toppings, baked goods, confection, beverages, desserts, snacks, and mixtures thereof.

Acidified dairy protein components, such as acidified whey protein concentrate, may be prepared and used as the food acidulant for lowering the pH of high moisture foods without imparting undue sourness. In one embodiment, acidified high moisture food compositions, and particularly acidified high moisture dairy products, are provided by acidifying a dairy food with an acidified dairy protein component prepared by combining whey protein concentrate with an edible inorganic acid and/or metal acid salt thereof in an aqueous medium to provide a mixture, and drying the mixture to provide acidified whey protein concentrate particulate having an acidifying power of at least about 0.01 mole/liter per gram of the acidulant at pH 4.0, and particularly may range from about 0.1 to about 0.5 mole/liter per gram of the acidulant at pH 4.0. The dairy food may comprise milk, milk derivative, or a combination thereof. The milk may be fresh (whole) milk, dried milk, concentrated milk, skim milk, reduced fat milk, and mixtures thereof. The milk derivative may be selected from the group consisting of whey, whey protein concentrate, cheese curd, caseinate, butter milk, cream, butter, milk fat, and mixtures thereof. The dairy product may be, for example, a sweetened cream filling and a cream cheese.

Alternatively, clean tasting, acidic ED compositions are prepared and used for lowering the pH of foods without imparting undue sourness. In one embodiment, the acidic ED composition is prepared by a process comprising contacting an aqueous solution having a total anion or total cation concentration of 1.8 N or less with a membrane electrodialysis system, wherein the membrane electrodialysis system is a stack comprising at least one electrodialysis cell comprising a bipolar membrane in between a cationic membrane and an anionic membrane, wherein the at least one cell is arranged between an anode electrode and a cathode electrode. In a preferred embodiment, the stack comprises a plurality of the cells. Electrical potential is applied across the anode electrode and cathode electrode for a time effective for changing the pH of the aqueous solution by at least 2.0 and providing an electrodialyzed composition having a total anion or total cation concentration of 1.0 N or less, individual cation or anion concentration of 1.0 N or less, and a free chlorine content of 1 ppm or less. In one embodiment, the membrane electrodialysis system may comprise a stack configuration selected from the group consisting of cathode electrode-(CAB)ₙC-anode electrode, cathode electrade-C(ABC)ₙ-anode electrode, cathode electrode-A(BCA)ₙ-anode electrode, and cathode electrode-(ABC)ₙ-anode electrode, where "C" represents a cationic membrane, "A" represents an anionic membrane, "B" represents a bipolar membrane, and "n" is a positive integer representing the number cells in the stack configuration. In one preferred embodiment, at least one electrodialysis cell is provided comprising in the following sequence, (i) a cathode electrode, (ii) at least one electrodialysis cell comprising, in this order, a cationic membrane, an anionic membrane, and a bipolar membrane, (iii) a cationic membrane, and (iv) an anode electrode.

In another alternative, edible inorganic acids and/or their metal acid salts may be used as a food acidulant used for lowering the pH of foods without imparting undue sourness. Inorganic acids which are useful in this regard include, for example, hydrochloric acid, sulfuric acid, metal acid sulfates and the like.

However, the use of one or more of the above-indicated non-sour food acidulants may not always eliminate or significantly reduce perceived sourness in the resulting low pH foods and provide an acceptable product, depending on the possible co-presence and concentrations of sourness-imparting components in the same food compositions. In particular, maintaining a low level of total organic acid, especially α-hydroxy organic acids, in a given food product (as consumed) may be important in providing an acceptable acidified food product. Effective ingredient selection and formulation to lower organic acid content is needed for some formulated food products to provide shelf-stable food composition which do not have a sour taste normally associated with low pH foods. In one embodiment, the acidified food composition has a total organic acid content of about 0.22 moles per 1000 grams of food composition or less, particularly a total organic acid content of about 0.12 moles per 1000 grams food composition or less, and more particularly a total organic acid content of 0.06 moles per 1000 grams food composition or less. The organic acids to be kept within these range amounts include, e.g., acetic acid, citric acid, lactic acid, malic acid, tartaric acid, fumaric acid, gluconic acid, adipic acid, and/or lactobionic acid. For prepared foods this may be obtained by appropriate ingredient selection and/or modification. In one embodiment, the finished food composition is free or essentially free of organic acids which impart sourness. However, it will be appreciated that a small flavor-modifying amount of a sour organic acid within the above range amounts may be included in a pH-modified food composition to adjust or alter the flavor profile in a desirable manner other than imparting undesirable acidic bite.

### BRIEF DESCRIPTION OF THE DRAWINGS

FIG. I is an example of a membrane electrodialysis system for decreasing pH in accordance with one embodiment of the present invention.

FIG. 2 is another example of a membrane electrodialysis system for decreasing pH in accordance with one embodiment of the present invention.

FIG. 3 is yet another example of a membrane electrodialysis system for decreasing pH in accordance with one embodiment of the present invention.

FIG. 4 is yet another example of a membrane electrodialysis system for decreasing pH in accordance with one embodiment of the present invention.

### DETAILED DESCRIPTION

This invention relates generally to a method of making high quality, high moisture, shelf stable, acidified food compositions using non-sour acidulants selected from an acidified dairy protein component, an electrodialyzed composition (ED), edible inorganic acids, edible metal acid salts of inorganic acids, or combinations of these. More particularly, a method is provided for making a a low-pH, high-moisture shelf-stable food composition with reduced sourness by combining a food with a low sourness acidulant having an acidifying power of at least about 0.005 mole/liter per gram of the acidulant at pH 4.0, in an amount effective for providing a food composition having an Aw of about 0.90 or greater with a final pH of 5.0 or less, particularly 4.6 or less, and more particularly 4.2 or less. In particular embodiments the low sourness acidulant has an acidifying power of at least about 0.01 mole/liter per gram of the acidulant at pH 4.0, more particularly at least about 0.1 mole/liter per gram of the acidulant at pH 4.0, and may range from about 0.01 to about 0.5 mole/liter per gram of the acidulant at pH 4.0.

As used herein "acidulant" refers to a pH-controlling agent which reduces pH of a food composition. "Acidifying power" refers to equivalent titratable acidity of a hydrochloric solution at given end pH of titration and is expressed as equivalent molar concentration (i.e. mole/liter) of the hydrochloric solution per gram of the acidulent. Thus, an acidulent with a acidifying power of 0.1 mole/liter per gram will have the same titratable acidity at specified end pH of titration (e.g. 4.0) as 1.0 gram of 0.1 mole/liter hydrochloric acid solution. "Suitable for human consumption" means free from harmful or unapproved chemical(s) or contaminants, pathogens and objectionable flavor or taste. "Shelf stable food products" generally means the preserved food products stored under ambient conditions are safe for consumption. Shelf stability is determined by safety (against the growth of pathogens) or microbiological stability (against spoilage microorganisms). "Shelf-life" means shelf life under specific storage conditions. Product shelf life is determined by organoleptic or eating quality, safety or microbiological stability. If a refrigerated distribution and storage system is used "shelf life" and "product stability" can be extended. In a particular aspect, shelf lives of about at least six months or preferably nine to twelve months are obtained for shelf (ambient) stable products. In another aspect, shelf lives of refrigerated products, i.e, products that are not shelf stable at ambient temperature, of at about 90 days or particularly at least 120 days may be obtained.

**Non-Sour Acidulants: Acidified Whey Protein.** In one particular embodiment, the non-sour acidulant used to directly acidify a food composition to very low pH is a highly acidified whey protein. Whey proteins have high nutritive value for humans. Whey proteins typically have molecular range between about 14,000 and 100,000 Daltons. A typical analysis of whey proteins is provided in the table below:

| **Whey Protein Faction** | **MW (daltons)** | **Percentage of Total Whey Proteins** |
|---|---|---|
| Beta-lactoglobulins | 18300 | 50 |
| Alpha-lactoalbamin | 14000 | 12 |
| Immunoglobulins | 15040 - 100,000 | 10 |
| Bovine Serum Albumin | 69000 | 5 |
| Proteose-peptones | 4100 - 41,000 | 23 |

All types of whey protein materials are considered to be potential sources of whey protein for use in the present invention and ultimately for use in food products. Thus, for example, suitable whey protein materials includes whey obtained from conventional cheese making processes, whey protein concentrate, whey protein isolate, and the like. The whey protein materials which contain whey proteins may be in the form of dried whey powder or concentrated (i.e., liquid) whey preparations. For purposes herein the term "whey protein" includes, but is not limited to, whey protein concentrates (WPC) and whey protein isolates (WPI). Typically, a WPC contains about 35 to about 80% protein and greater than about 4% fat, and a WPI typically contains about 90% or more protein and less about 2% fat. Traditionally, WPC is derived from whey which is the by-product of either acid (mineral acid or lactic whey) or sweet (cheese or rennet whey) coagulation of milk protein from milk in the manufacture of cheese or casein. The standard methods for producing WPC from acid or sweet whey are well known and are discussed, for example in United States patent specification US 4,200,662, which descriptions are incorporated herein by reference. Whey protein hydrolysates also may be used if they are susceptible to acidification as described herein.

**Whey Protein Acidification Process.** Acidified whey protein is generally prepared by providing a hydrated form of the material, acidifying it with an inorganic acid and/or metal acid salt thereof, optionally heating the acidified whey protein for texturing, and drying to provide an acidified whey protein particulate. One particular process for acidifying whey protein includes the following steps:

(1) prepare an aqueous mixture of the whey protein material. In cases where the original whey protein material is an aqueous solution (e.g., whey from a cheese manufacturing process), the material may be used as is, or additional water may be added or removed as desired, to form the aqueous mixture. For dried whey materials (e.g., whey protein isolate, whey protein concentrate, and the like), water is added to form the aqueous mixture.

(2) acidify the aqueous mixture of whey protein material. An inorganic acid ard/or metal acid salt thereof is added in an amount effective to lower the pH of the aqueous mixture to about 2.5 to about 4, preferably about 2.5 to about 3.2, in order to maintain the solubility of the whey proteins. Suitable inorganic acids for this purpose include, but are not limited to, inorganic acids, such as hydrochloric acid, sulfuric acid, and combinations thereof Non-sour tasting inorganic acids are preferred for this acidification process. Organic acids, in particular, are undesirable as they impart sourness. The resulting acidified whey protein is not pH neutralized via diafiltration, pH adjustment, etc. While maintained in acidic state, the aqueous acidified whey protein material may optionally be subjected to heat treatment of at least about 170°F, particularly at about 175 to about 185°F, for approximately 20-30 minutes sufficient to modify (i.e., increase) the viscosity of the material. Heat treatment can be managed such that the aqueous acidified whey protein material may form an emulsion, but not a gel.

The acidified whey protein is dehydrated (e.g., evaporative heating, freeze-drying, spray drying, etc.) sufficient to form a dry acidified whey protein material. The dried protein preparation is particulated (powdered) to a useful particle size. For example, an acidified whey protein particulate having an average particle size of from 1 to 100 microns can be provided and used. Particulation of the acidified whey protein may be achieved simultaneously with drying by using spray-drying techniques. Further grinding or milling by mechanical means also may be used. The acidified whey protein particulate generally has a solubility of at least 50%, and more preferably at least 70%, at about 25°C when reconstitituted in aqueous solution at a pH of about 7.

The dry acidified whey protein particulate described above can be combined with other ingredients, such as emulsifying agents stabilizing agents, anti-caking, anti-sticking agents and the like. Representative stabilizing agents are gums, which include naturally occurring plant polysaccharides such as obtained from trees, seeds, seaweed and microbes, including gum arabic, acacia, tragacanth, karaya, larch, ghatti, locust, guar, agar, algin, carrageenan, furacellaran, xanthan, pectin, certain proteins such as gelatins, plus certain chemical derivatives of cellulose. The dry acidic whey protein particulate of the invention may be rehydrated before or during the combining step with a food composition by adding an aqueous ingredient such as water and/or milk (thus, the various ingredients may be combined in any suitable order). The product can then be frozen, refrigerated, or cooked, depending upon the particular type of product, and stored for further use.

In a particular embodiment, the acidified whey protein is acidified whey protein concentrate ("aWPC") with a minimum acidifying power of at least about 0.01 mole/liter per gram of the acidulant at pH 4.0, and particularly may range from about 0.1 to about 0.5 mole/liter per gram of the acidulant at pH 4.0. The aWPC used can be in either slurry or powder form acting primarily as a pH controlling agent and secondarily as a texture modifier. Optionally, there is no need of using any additional pH controlling agent(s) such as electrodialyzed composition, inorganic acid, metal acid salt of inorganic acid, or mixture thereof in preparing acidified food composition. In general, a highly acidic food ingredient or aWPC is added directly to the whole formula mix by simple blending and mixing. The amount of highly acidic food ingredient or aWPC is determined by the buffering capacity of the whole formula and target final pH of acidified food composition. This method of using aWPC for making acidified food or dairy compositions also provides improved texture, whippability and overall product appearance. The dairy composition may be made mainly from milk (e.g., fresh (whole) milk, concentrated milk, skim milk, reduced fat milk, and mixtures thereof) and milk derivatives (e.g. whey, cheese curd, casein, cream, butter milk, butter, butter fat and the like). Other edible ingredients or additives optionally may also be added to the acidified dairy composition including vegetable oil, sugar, salt, emulsifier, hydrocolloid, stabilizer, flavorant, colorant, vitamin, mineral, herbs, spice and particulates. A final pasteurization step (e.g., hot fill) optionally may be used to further enhance shelf stability. The inventive, shelf stable, acidified food or dairy compositions can be used in the form of a final product including, not limited to, cream cheese, dressings, sauces, dips spreads, desserts, snacks, beverages and confections. They can also be used as a component in multiphase food products, particularly snacks (e.g, as a filling or topping).

This embodiment of the invention extends non-sour acidification/preservation technology to further cover the use of a highly acidified food ingredient (e.g., aWPC) as a means of obtaining desirable product pH in the manufacturing of high quality (e.g. low sourness), high moisture, low pH, shelf stable food products. Furthermore, the use of such ingredients, more specifically aWPC, allows not only the microstability with reduced sourness, but also quality improvement (e.g. in firmness, creaminess, whippability) and process simplification (i.e. the elimination of acid handling and a separate acidification step with improved pH accuracy in the final acidified food composition). As such, the aWPC may be used as a dual functionality ingredient in manufacturing high quality, shelf stable food products. This is particularly applicable for markets where outlay of high capital investment costs for expensive processes (e.g., aseptic processing) is unlikely, and/or refrigeration or frozen distribution systems are either limited or non-existent.

**Other Non-Sour Acidulants.** While acidified whey protein is one particular non-sour acidulant for practicing the present invention, other sources of acidified protein can also be used as non-sour acidulants for preparing very low pH high moisture shelf-stable food compositions. These include, for example, acidified soy protein, acidified egg albumin, and acidified grain protein. The acidified egg albumin may comprise, e.g., acidified fresh, refrigerated, frozen or dried egg white. Acidified grain flours, such as acidified whole wheat flours, may be used as a source of acidified grain protein. Alternatively, acidified soy flours may be used as a source of acidified soy protein. Additional useful non-sour acidulants and methods for preparing and using same are described below in more detail.

**Edible Inorganic Acids and Metal Acid Salts Thereof.** Edible inorganic acids which may be used in the invention include, for example, hydrochloric acid and sulfuric acid, and mixtures thereof. Metal acid salts of inorganic acids that may be used in this invention include, but are not limited to, edible alkali or alkaline earth metal acid salts, such as sodium, potassium, calcium or magnesium salts of sulfate and bisulfate. These metal acid salts include, e.g., sodium bisulfate (i.e., sodium hydrogen sulfate or sodium acid sulfate), potassium bisulfate (i.e., potassium hydrogen sulfate), calcium bisulfate (i.e., calcium hydrogen sulfate, acidified calcium sulfate), magnesium bisulfate (i.e., magnesium hydrogen sulfate or magnesium acid sulfate), and mixtures thereof. These metal acid salts are commercially available in dry granular crystalline form in particle sizes that can be readily and uniformly dispersed and solubilized in aqueous based dairy blends or other food compositions. Food grade sodium acid sulfate may be commercially obtained in dry granular form, e.g., as pHase^{™} (Jones-Hamilton Co., Walbridge OH). Food grade calcium acid sulfate may be commercially obtained in dry granular form, e.g., as Safe₂O^{™} (Mionix, Rocklin, CA).

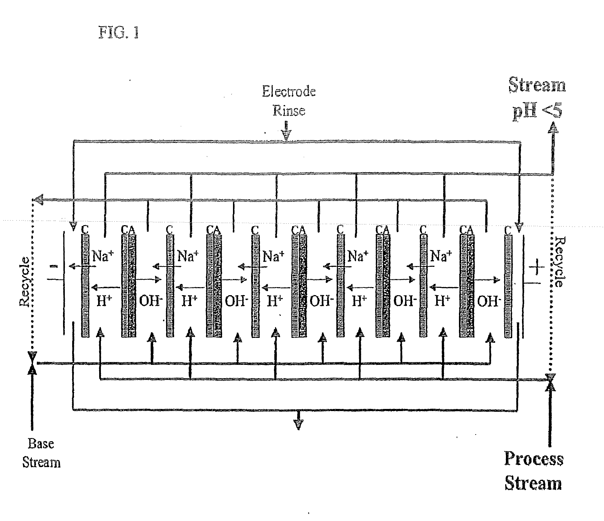

**ED Compositions and Processing.** As described below, an aqueous solution is used as a feed stream and is processed using membrane electrodialysis to form an ED composition. The ED composition also may be used in the formulation and/or preparation of the acidified food composition. ED compositions, like the contemplated inorganic acids and salts thereof, used herein are suitable for human consumption. FIGS. 1-4 illustrate three different non-limiting examples of electrodialysis systems that may be used to form the ED compositions. Unless indicated otherwise, ED processing descriptions and materials therefore as described below should be considered applicable to any of the systems of FIGS. 1-4.

**Aqueous Solution for ED Processing.** Aqueous feed solutions which may be treated with an ED method to produce acidic ED composition include any mineral or ion rich aqueous solution obtainable from natural water sources such as spring water, well water, municipal water, sea water and/or artificially ion enriched water free from contamination and excessive chlorination (for example greater than about 2 ppm of free chlorine). An aqueous feed solution for ED treatment should have a total cation or total anion concentration of about 0.001N to about 1.8N which is effective for providing an initial conductivity of about 0.1 to about 200 mS/cm. As used herein, "total cation concentration" or "individual cation concentration" means any cation (such as Na⁺, K⁺, Ca⁺⁺, Me⁺⁺) concentration excluding hydrogen ion concentration. "Total anion concentration" or "individual anion concentration" means any anion (such as Cl⁻, F⁻, SO₄⁻², PO₄⁻³) concentration excluding hydroxyl ion concentration. Ion concentrations may be determined using techniques known in the art, such as for example, inductive coupled plasma atomic emission spectroscopy for selected cations and ion chromatography for selected anions.

In an important aspect, the aqueous feed solution to be treated with ED may have a total cation or total anion concentration of about 0.002N to about 1.0N which is effective for providing an initial conductivity of about 0.005 to about 30 mS/cm. For example, the aqueous solution to be treated with ED may include at least one of the following:

| **Cations:** | **Concentration (N)** |
|---|---|
| calcium | 0-0.2 |
| magnesium | 0-0.002 |
| potassium | 0-0.01 |
| sodium | 0-1.7 |

| **Anions:** | |
|---|---|
| bicarbonate | 0-0.07 |
| chloride | 0-1.7 |
| sulfate | 0-0.01 |

**Membrane Electrodialysis.** As shown in Figures 1-4, membrane electrodialysis may be conducted using various configurations of a bipolar membrane and anionic and cationic membranes. The membranes are disposed between a cathode electrode (i.e., negatively (-) charged electrode) and an anode electrode (i.e., positively (+) charged electrode), and subjected to an electrical field. The membranes form separate compartments and materials flowing through those compartments may be collected separately. An example of an electrodialysis apparatus containing ion-selective membranes is EUR6 (available from Eurodia Industrie, Wissous, France), Suitable membranes are available, for example, from Tokuyama (Japan). A bipolar membrane includes a cationic membrane and an anionic membrane joined together.

In accordance with one aspect, an aqueous solution is contacted with the ion-selective membranes. Aqueous solutions may be processed in a batch mode, semi-continuous mode, or continuous mode by flowing an aqueous solution over the ion-selective membranes. An electrical potential is applied across the anode and cathode for a time effective for providing an electrodialyzed solution with the desired pH and ion concentrations. Processing times in batch mode and flow rates in semi-continuous mode or continuous mode are a function of the number of ion-selective membranes that are used and the amount of electrical potential applied. Hence, resulting ED solutions can be monitored and further processed until a desired pH and ion concentration is achieved. Generally, an electrical potential of about 0.1 to about 10 volts is provided across each stream between two membranes in each cell.

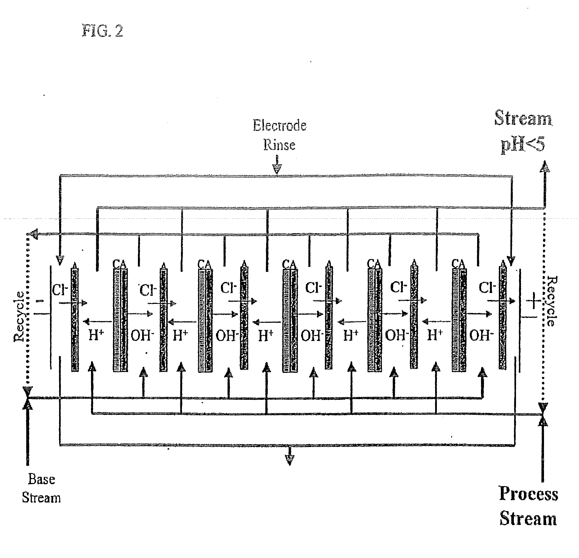

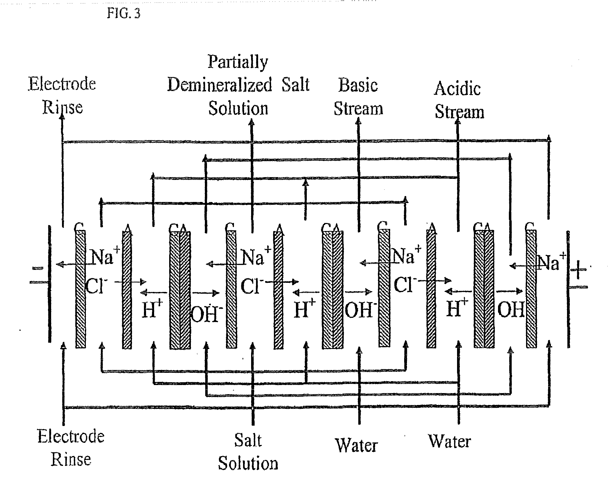

As shown in FIGS. 1-4, the membrane electrodialysis systems of the present invention comprise at least one bipolar membrane in between a pair of cationic membranes (FIG. 1), or in between a pair of anionic membranes (FIG. 2), or in between a cationic membrane and an anionic membrane (FIGS. 3-4). Referring to the embodiments of Figures 1-2, the pH of the aqueous solution may be adjusted to a pH range of about 0 to about 7 by contacting the aqueous solution with a plurality of bipolar membranes with each bipolar membrane in between two cationic membranes (FIG. 1), or, alternatively between two anionic membranes (FIG. 2). Referring to the embodiments of Figures 3-4, the pH of the aqueous solution may be adjusted to a pH range of about 0 to about 7 by contacting the aqueous solution with a plurality of bipolar membranes with each bipolar membrane in between a cationic membrane and an anionic membrane (FIGS. 3-4). In FIGS. 1-4, materials from the compartments to the left of the bipolar membranes are collected for subsequent use, The stream to the right of the bipolar membrane may also be collected for use in alkaline products. Materials collected from the compartments to the right of the bipolar membranes may be recirculated back through the membranes or circulated to a second membrane electrodialysis as many times as needed to provide an aqueous solution having a pH of about 0 to about 7, preferably, about 1 to about 5. Materials from the compartments to the left of the bipolar membranes may also be recirculated back through the membranes. Materials from the compartments adjacent to the anode and cathode may be recirculated back through the membranes.

Referring to FIG. 3 in more detail, in this embodiment a multi-compartment electrodialysis system is presented in which an aqueous solution having a total anion or total cation concentration of 1.8 N or less is contacted with a membrane electrodialysis system including, in the following sequence, (i) an cathode electrode, (ii) at least one electrodialysis cell comprising, in this order, a cationic membrane, an anionic membrane, and a bipolar membrane, (iii) a cationic membrane, and (iv) an anode electrode. An electrical potential is applied across the cathode electrode and anode electrode for a time effective for changing the pH of the aqueous solution by at least 2.0 and providing an electrodialyzed composition having a total anion or total cation concentration of 1.8 N or less, individual cation or anion concentrations of 0.9 N or less, and a free chlorine content of 2 ppm or less (preferably 1 ppm or less). In this illustration, the membrane electrodialysis system includes a plurality of said cells between the cathode electrode and the cationic membrane located adjacent the anode. The number of such cells, represented as "n" elsewhere herein, is not particularly limited, and may number, for example, one, two, three, or more.

More particularly, the membrane arrangement illustrated in FIG. 3 basically has stack configuration (1):

(I) cathode electrode-(CAB)ₙC-anode electrode where "C" refers to a cationic membrane, "A" refers to an anionic membrane, "B" refers to a bipolar membrane, and "n" refers to the number of cells in the stack. The direction of charges is indicated in the illustrated system. Four streams are involved. The feed "water" that runs between "A" and "B" does not need electrolyte (e.g. salt) addition, and it will become acidic at discharge. Salt/electrolyte may be optionally used in the process/feed stream as a processing stream. The resulting "Basic Stream" runs between B and C. A "Salt Solution" runs between C and A (left to the B in this illustration). The "Electrode Rinse Stream" runs through the two sides in between Anode-C and between C-Cathode. Using this membrane configuration, it is possible to treat potable (drinking) water under relatively mild ED conditions to produce acidified water with no off-taste (e.g., < 2 ppm free chlorine).

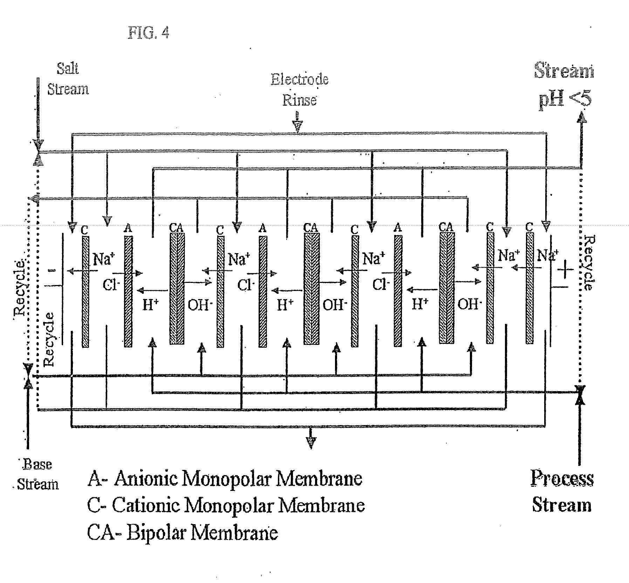

Referring to FIG. 4, which is an alternative membrane arrangement to that of FIG. 3 in which a bipolar membrane is disposed between cationic and anionic membranes, a stack configuration (II) is used as follows:

(II) cathode electrode-C(ABC)ₙ-anode electrode where "A", "B", "C" and "n" have the same meanings as indicated above.

As other alternatives to FIG. 3, a three chamber stack configuration (III) or (IV) may be used as follows:

(III) cathode electrode-A(BCA)ₙ-anode electrode; or

(IV) cathode electrode-(ABC)ₙ-anode electrode. In configurations (III) and (IV), the acid and base streams are demineralized and a salt stream is enriched.

Regarding stack configurations (I)-(IV), it will be appreciated that the sequence of membranes and electrodes, from a left-to-right perspective, is arbitrary to the extent it is subject to the perspective of the viewer of the equipment lay-out. For instance, for purposes herein, the stack configuration (I) described as: cathode electrode-(CAB)ₙC-anode electrode, refers not only to that left-to-right sequence (e.g., such as from a frontal perspective), but also a reverse view from behind the same equipment layout which will reverse the sequence of the stack configuration, from a lelt-to-right perspective, to anode electrode-C(BAC)ₙ-cathode electrode. Similarly, for purposes herein, the above-indicated stack configuration (II) of cathode electrode-C(ABC)ₙ-anode electrode also refers to the reverse-view (from behind) perspective of the same stack sequence of anode electrode-(CBA)ₙC-cathode electrode.

**Electrodialyzed Composition.** After treatment with membrane electrodialysis, such as according to any one of the systems of FIGS. 1-3, the pH altered ED composition has a total cation or anion concentration of less than about 1.8N, a concentration of any individual ion of less than about 1.0N and a free chlorine content of less than 2 ppm. In a preferred embodiment, the ED composition has a total cation concentration or anion concentration of less than about 0.5N, individual cation or anion concentration of less than 0.3N, and a free chlorine content of less than 1 ppm. For example, the electrodialyzed composition may contain at least one of the following:

| **Concentration (N)** | |
|---|---|
| **Cations:** | |
| calcium | 0-0.1 |
| magnesium | 0-0.001 |
| potassium | 0-0.005 |
| sodium | 0-0.9 |

| **Anions:** | |
|---|---|
| bicarbonate | 0-0.04 |
| chloride | 0-0.9 |
| sulfate | 0-0.005 |

Other non-toxic, edible ions may also present limited mainly by the taste impact of the individual ions.

After treatment with membrane electrodialysis, ED compositions will have a pH ranging from about 0.0 to about 5. Treated solutions have a free chlorine content of less than 1 ppm and do not have objectionable tastes and/or odors.

**Preparation of Shelf-Stable Food Compositions.** Food compositions which may be prepared with the above described various types of non-sour acidulants with methods of the invention include, for example, sauces, gravies, spreads, dips, dressings, salads, vegetables, starches (rice, potato, pasta, noodle, etc.), meats, sea foods, cereals, baked goods, fillings, toppings, baked goods, confection, beverages, desserts, snacks, and mixtures thereof.

The non-sour acidulant may be incorporated into a food composition from a dry state, liquid state, or aqueous dispersed state. If liquid forms of non-sour acidulants are available or provided, such as ED compositions, they may be formulated into a food product by complete or partial substitution for the water normally present in the formula. Shelf stable formulated food products may be prepared by directly incorporating an amount of non-sour acidulant of predetermined pH into a food formula effective for obtaining an acidified food product, wherein the amount is sufficient to achieve a final product pH of less than about 5.0, particularly less than about 4.6, and more particularly less than about 4.2.

Generally, shelf-stable food compositions are prepared using a non-sour acidulant having a pH of about 1.0 to about 3.5. The non-sour acidulant may be incorporated into the preparation of the food itself or it may be used in the cooking of the food composition. Small amount of conventional food acidulant(s) such as vinegar, may still be used mainly for flavor and/or taste purposes as discussed in more detail below. For food compositions normally expected to be sour (e.g. cultured dairy products, fruit flavored products), the sourness of these food compositions after further acidified to a pH of 4.3 or less can be significantly reduced by completely or partially acidified the food compositions using a non-sour acidulant as described herein as long as the total organic acid content in finished food compositions can be kept low, as described below in more detail.

To provide microbiological stability, acidified food compositions may optionally be thermally treated, e.g., pasteurized, in combination with the acidification treatment. For instance, the acidified food composition may be placed in a heat-stable, sealable container. The container is sealed followed by thermally treating the food product in the sealed container at a temperature and for a time effective to pasteurize the food product. The required pasteurization step may be achieved by a simple hot fill of the acidified food product into the container. Cooling of the thermally treated food product to reduce the temperature to below about 25°C is generally desirable. The preserved food products have no objectionable sour taste or off-flavors commonly associated with the use of organic acid type food acidulants and are stable under ambient conditions for at least 6 months but generally in the order of 9 to 12 months (i.e., organic acids).

As salt or sodium content is no long a factor in ensuring shelf stability in a low pH (e.g. 4.2 or less) and heat processed (e.g. pasteurized) product, any level of sodium reduction is possible (e.g. salt-free, lightly salted). Thus, present invention can also be used to provide nutritionally improved products.

**Preparation of Shelf-Stable Dairy Products.** Shelf-stable dairy products may be prepared by blending about 2 to about 12 weight percent whey protein concentrate powder with a non-sour acidulant in an amount to provide a pH of 4.3 or less, preferably 3.5 or less. Any dry or liquid sweet whey protein concentrates derived from sweet whey may be used (for example FDA53 from First District, MN.). Whey protein concentrates or isolates with low organic acid content are most preferred. Dry whey protein concentrates are commercially available at a variety of protein contents. When dry whey protein powder is used, powder are first gently mixed with warm water (about 30 to 50°C) with only gentle agitation using, for example, a Groen Kettle to avoid aeration. Additional mixing or shearing can be used as needed to fully solubilize whey protein to form a whey protein solution.

If a final product contains liquid oil, portion of the oil from final product formula may be added to the whey protein slurry to minimize foaming. Optionally, a selected defoaming agent (for example, Trans-220K, Trans-Chemco, Inc. WI) may be used. Whey protein solution is texturized by heating to a temperature at about 180 to 205°F and holding a time for about 5 to 20 minutes. Thick, gel-like, texturized whey protein slurry is formed during heating and can be used directly or as a dairy protein ingredient to be incorporated into food product. This texturized whey protein slurry is physically stable (without the risk of precipitating) in low pH food products and can be readily used as-is or further neutralized to a target pH (e.g. pH = 4.0) generally to a higher pH than its as-is pH by blending in untexturized whey protein and/or other food ingredients generally of high pH. In less preferred cases, edible base (e.g. sodium hydroxide) may be added for pH standardization prior to subsequent preparation of low pH, shelf stable, dairy products.

While similar sauces maybe made by substituting whey protein isolate (WPI) with a commercial whey protein concentrate (WPC) at equal protein content in finished sauce, a substantially sourer and less acceptable sauce was obtained. This is apparently due to the high level of organic acids (mainly citrate and phosphate) in the WPC. In contrast, such organic acids have typically been removed during WPI production. Similarly, while another cheese flavor with added lactic acid and phosphoric acid was used, the resulting sauce became sourer and less acceptable.

**Preparation of Cream Cheese.** A shelf stable cream cheese, cream cheese product or dairy product is highly desirable for global emerging markets in which refrigeration distribution is lacking or non-existent. The pH for a typical cream cheese product is around pH 4.7 to 5.0, which requires refrigeration storage to ensure a minimum of 5 months of shelf life. Further lowering of pH (e.g. below 4.6) via fermentation increasingly resulted in perceived sourness intensity due to lactic acid formation. For cream cheese, certain level of sourness are tolerated and often required for typical flavor profile of such products (i.e. fermented). However, the product becomes unacceptably sour in taste when product pH falls below about 4.3. Therefore, a low pH (4.3 or less) cream cheese, cream cheese-like product or dairy products with reduced sourness is desirable. Although truly shelf stable real cream cheese does not exist, prior art attempts of manufacturing ambient stable cream cheese snack product have mainly involved keeping the product pH below 4.6 and by using preservatives including humectants (e.g. glycerol) to control the Aw to below about 0.9. Although, these approaches can improve product safety against food-born pathogens, they often render the products in poor flavor, taste (particularly objectionable sourness and off-taste from polyols), texture and/or stability. In addition, these approaches typically require the use of already made cream cheese typically about 50% of the finished product by weight as starting material. This requires additional handling and processing steps to prepare final acidified product, thus is difficult to be adapted to existing cream cheese process. Present invention not only significantly mitigates the sourness problem by selective use of pH-lowering agent(s), particularly those with little or no sourness impact but also provides a high quality, real cream cheese/ dairy composition made truly (ambient) shelf-stable using normal cream cheese process. Furthermore, the present invention also represents an improved firmness and physical stability (against emulsion breakdown, syneresis, etc.) of cream cheese at ambient storage temperature by adjusting the stabilizer system without sacrificing creamy mouthfeel or developing objectionable pasty or gummy texture. Unlike prior art, the present invention may be made to comply with the US standard of identity for cream cheese.

In one aspect, a high quality, high moisture (e.g. Aw>0.9), shelf stable cream cheese or dairy composition that includes, but not limited to, cream cheese, dairy spreads/ dips, dairy desserts and dairy beverages is provided. For example, a shelf stable cream cheese or cream cheese product is made directly with a conventional cream cheese process having a final product pH of 5.0 or less, preferably 4.3 or less, more preferably about 4.2 or less without inducing the objectionable sour taste commonly associated with the low pH of such products. The inventive product is substantially free from syneresis (e.g. less than 2% after 6 months at ambient temperature) and has a creamy texture with a yield stress of at least 500 pascals at room temperature, preferably 1,000 to 2,000 pascals and is microbiologically stable under ambient storage conditions without the need for chemical and/or biological preservatives and/or Aw-lowering humectants (e.g. polyols). To prepare the inventive product, various manufacturing processes known to the art may be used, These applicable processes include, but are not limited to, conventional curd process and future-state wheyless process. For example, the former involves first fermenting a dairy mixture to a pH of about 4.6 or higher, preferably 4.9 or higher to generate sufficient cream cheese or cultured dairy flavors followed by additional and direct acidification using one or more of the low sourness acidulants to obtain a final product pH of less than 4.3. If cultured dairy flavor is not needed, culturing step may be omitted and direct acidification is used. A final heat/pasteurization step may be included to further enhance shelf stability. Any non-sour acidulants and any combinations of the afore-mentioned pH-lowering agents may be used in the present invention as long as the target acidic pH and a desirable level of sourness and flavor profile are achieved. Preferably an acidified dairy protein, an acidic ED composition, an edible inorganic acid, an edible metal acid salt of an inorganic acid, acidified soy protein, acidified egg albumin, acidified grain protein, or mixtures thereof, are used as primary pH lowering agents in the present invention. The desirable sourness at a target product pH is carefully achieved by controlling the ratio of non-sour-tasting pH-lowering agents (e.g., acidified whey protein) and, if present, sour-tasting food acids (e.g., citric acid) in the final preserved product. Other edible sour tasting acids can also be used in this invention as a flavor modifier include, but not limited to, acetic acid, adipic acid, fumaric acid, gluconic acid, lactic acid, lactobionic acid, malic acid, phosphoric acid and tartaric acid. The approach and method of making the inventive products can also be used to extend the shelf life of refrigerated dairy compositions such as cream cheese (pH around 4.7 to 5.0) by further lowering the product pH (e.g. to below 4.6) using a non-sour-tasting, pH-lowering agent. The inventive product is further characterized by selective use of stabilizer system, taste modifiers and natural and/or artificial flavors for a balanced cream cheese flavor profile and an acceptable firmness/ physical stability. At least one (or a combination of more than one) anionic stabilizer gum is used at a total level of 0.1% or higher. These anionic gums include, but not limited to xanthan, carrageenan, pectin and agar. Optionally, natural and/or artificial flavors and a food-grade antioxidant such as Vitamin E/ EDTA can be added to improve overall flavor profile and stability.

**Milk and Dairy Based Products.** Food products made from fresh or real milk are highly valued by consumers worldwide. Current high milk based snacks are typically low in convenience and portability (e.g. ice cream sandwich) and/or high in preservatives (e.g. salt, sugar, humectants, antimycotics). Shelf stable, high moisture, milk or dairy based snacks are highly desirable for global emerging markets in which refrigeration and/or frozen distribution are lacking or non-existent. Potentially, high moisture also enables higher product quality (e.g. creamy texture) and lower formula cost. The present invention is particularly applicable if 'made with fresh milk' claim is desirable. Lowering of pH through fermentation, novel acidification and their combination provide product safety with the ability to control and deliver desirable sourness intensity in most food products; even at a pH below about 5.0, and particularly below 4.3. The present invention uses and expands the novel acidification and preservation technology to create shelf stable snacks, particularly, multi-phase snacks with the dominant phase being high moisture, creamy, milk/dairy based component with desirable organoleptic quality and necessary handling/ processing characteristics (e.g. for forming and shaping). Products provided desirable properties include very high moisture food compositions (i.e., Aw > about 0.9, particularly Aw> about 0.92, more particularly Aw > about 0.95). The improved shelf stability provided is applicable to many environments including, e.g., ambient storage conditions.

In some embodiments creamy, shelf stable, high moisture, milk or or dairy based food product or snacks are provided. The snack has a milk or dairy containing component alone or, in a multi-phase product, as a major portion thereof enclosed, sandwiched, etc. by a minor portion(s) made of cereal (e.g. cookies), confection (e.g. chocolate), etc.. The milk/dairy component has a moisture content of at least about 45 percent by weight, a water activity of at least about 0.90, a pH of less than about 4.6, preferably about 4.2 or less and comprises mainly milk (fluid/dried, fresh/ concentrated, etc.) and milk derivatives (whey, whey protein concentrate, whey protein isolate, caseinate, cheese curd, butter, butter milk, cream, milk fat, etc.), acidified with a non-sour acidulant, such as acidic whey protein, ED composition, inorganic acid or metal acid salts thereof, or mixtures thereof. The said milk/ dairy component also may contain at least one hydrocolloid stabilizer (e.g. gelatin, carrageenan) to provide desirable processability (e.g. shaping). Optionally, flavorants, colorants, minerals, nutrients and/or other functional ingredients may be added. The milk/dairy component is prepared by mixing, pasteurizing and homogenizing a dairy mixture with optional fermentation step thereafter, and acidifying, heating, homogenizing, aerating (optional) and filling/ forming it into a suitable mould/ shape upon cooling. Control atmosphere packaging or preservatives (e.g. potassium sorbate) may also be used for mold and yeast control. In a multi-phase product, the minor portion, typically a lipid-continuous-phase coating (e.g. chocolate) or a baked cereal product (e.g. cookies) optionally coated with a lipid containing coating is applied. The pH of the minor components should be about 5.0 or less, and more preferably match the pH of the major component (e.g. milk or dairy filing). The snack has low sourness and is safe and stable for at least about 30 days or longer (for example, four months under refrigerated storage conditions).

**Total Organic Acid Content.** Total organic acid content in a food product can influence the perceived sourness intensity. The "organic acids" in a preserved food mainly come from the added edible food acidulants including, but not limited to, acetic acid, adipic acid, citric acid, fumaric acid, gluconic acid, lactic acid, malic acid, phosphoric acid and tartaric acid. Natural occurring organic acids in food ingredients will also contribute to perceived sourness. Thus "total organic acid content" is defined hereafter as the sum of all the above-mentioned food acidulants and all natural occurring organic acids (including those not mentioned above such as oxalic acid, succinic acid, ascorbic acid, chlorogenic acid and the like). An organic acid profile can be readily obtained using appropriate analytical method such as S. Rantakokko, S. Mustonen, M. Yritys, and T. Vartiainen. Ion Chromatographic Method for the Determination of Selected Inorganic Anions and Organic Acids from Raw and Drinking Waters Using Suppressor Current Switching to Reduce The Background Noise from Journal of Liquid Chromatography and Related Technology (2004); 27, 821-842. The quantity of individual organic acids can be measured and summed up to give "total organic acid content" which is conveniently expressed in "moles per 1000 grams of finished food composition".

The use of one or more of the above-indicated non-sour food acidulants may not always eliminate or significantly reduce perceived sourness in the resulting low pH foods and provide an acceptable product, depending on the possible co-presence and concentrations of sourness-imparting components in the same food compositions. In particular, maintaining a low level of total organic acid, especially α-hydroxy organic acids, in a given food product (as consumed) may be important in providing an acceptable acidified food product. Effective ingredient selection and formulation to lower organic acid content is needed for some formulated food products to provide shelf-stable food composition which do not have a sour taste normally associated with low pH foods. In one embodiment, the acidified food composition has a total organic acid content of about 0.22 moles per 1000 grams of food composition or less, particularly a total organic acid content of about 0.12 moles per 1000 grams food composition or less, and more particularly a total organic acid content of 0.06 moles per 1000 grams food composition or less. The organic acids to be kept within these range amounts include, e.g., acetic acid, citric acid, lactic acid, malic acid, tartaric acid, fumaric acid, gluconic acid, adipic acid, and/or lactobionic acid. For prepared foods this may be obtained by appropriate ingredient selection and/or modification. In one embodiment, the finished food composition is free or essentially free of organic acids which impart sourness. However, it will be appreciated that a small flavor-modifying amount of a sour organic acid within the above range amounts may be included in a pH-modified food composition to adjust or alter the flavor profile in a desirable manner other than imparting undesirable acidic bite.

Unless otherwise noted, all percentages given herein are weight percentages. The following examples are provided to illustrate the invention and not limit it.

### EXAMPLE 1: Highly Acidic Egg White Protein as Acidulant

An aqueous mixture comprising 200 g of pasteurized, dry egg white (National Egg Products Co., Social Circle, GA), 340 g of de-ionized water and 34.5 g of 6.25 N food grade hydrochloric acid was homogenized in a Champ HP3 high performance blender (Springfield, MO) and then freeze dried to form a highly acidic egg white powder (aEWP). The aEWP powder had an acidifying power of 0.46 mole/liter per gram at pH 4.0.

A mayonnaise dressing was prepared using the aEWP powder as major acidifying agent to replace vinegar in the dressing according to the following recipe. The aqueous phase of the dressing is prepared by mixing water, egg yolk, sugar, and salt in a lab mixer. Oil was added slowly to the aqueous phase with mixing/ shearing. For the control sample and vinegar were added at the end. For the aEWP containing sample, aEWP was first dissolved in about half amount of water from the formula. The resulting paste was used to replace vinegar in preparing the aEWP sample. Final pH of the aEWP sample was 3.68.

**Table 1**

| | **Control** | | **aEWP Sample** |
|---|---|---|---|
| **Ingredient** | **wt%** | | **wt%** |
| Oil | 78.4 | | 78.4 |
| Water | 12.1 | | 14.6 |
| Egg yolk | 1.1 | | 2.9 |
| Whole egg | 4.5 | | 0 |
| Sugar | 0.6 | | 0.6 |
| Salt | 0.8 | | 0.8 |
| EDTA | 0.007 | | 0.007 |
| Vinegar (120 grain) | 2.55 | | 0 |
| Acidified egg white | -- | | 2.7 |
| **Total** | 100 | | 100 |
| pH | 3.50 | | 3.68 |
| Physical state | Stable emulsion | | Stable emulsion |

Sensory evaluation of the shelf stable, aEWP-containing dressing revealed that it had a reduced sour taste as compared to the control and was excellent in flavor, texture and emulsion stability.

**EXAMPLE 2: Process Using Bipolar Membrane Electrodialysis to to Generate Acidic Water**

An acidic aqueous ED composition was prepared by using ED equipped with a cation monopolar-anion monopolar-bipolar-cation monopolar membrane configuration such as described above for FIG. 3. A bipolar membrane was placed in between a plurality of cationic membranes and/or a plurality of anionic membranes. A salt solution (about 12.5% NaCl) was used between the cation monopolar membrane and the anion monopolar membrane separated from process stream (i.e. acidic and basic water streams) and was partially demineralized after the ED treatment. Eight litres of softened municipal water for the acid feed water stream and eight liters distilled water for the basic feed water stream were processed using an electrical potential less than 5 V/cell with 800 A/m² current for about 60 minutes until a pH below 1.0 was achieved for the acidic water stream. Ion profiles of the feed aqueous solution (pre-ED water) and the treated acidic aqueous solution (post-ED water) are given in the Table 2 below. Treated water was standardized by adding deionized water to a final pH of 1.0.

**Table 2**

| | **Ion Concentration (mN)** | |
|---|---|---|
| | **Pre-ED water** | **Post-ED water** |
| Calcium | 0 | 0 |
| Magnesium | 0 | 0 |
| Sodium | 2.72 | 2.72 |
| Potassium | 0.05 | 0.05 |
| Total Non-H⁺ Cations | 2.78 | 2.78 |
| Sulfate | 1.21 | 1.21 |
| Chloride | 0 | 172.8 |
| | | |
| Conductivity (mS/cm) | 0.27 | 40.8 |
| pH | 6.98 | 1.08 |

The Pre-ED water had a pH of 6.98 and the Post-ED water had a pH of 1.08 (0.76 by titration). The treated, acidic aqueous solution has no objectionable odor. When diluted with deionized water to pH of 3.25, the resulting mixture is practically tasteless.

### EXAMPLE 3: Highly Acidic Soy Flour as Acidulant

An aqueous mixture comprising 200 g of defatted soy flour (Archer-Daniels-Midland Co., Decatur, IL), 800 g of de-ionized water and 37.6 g of 6.25N food grade hydrochloric acid was homogenized in a Champ HP3 high performance blender (Springfield, MO) and then freeze dried to form a highly acidic defatted soy flour (aDSF) powder. The aDSF powder had an acidifying power of 0.29 mole/liter per gram at pH 4.0.

A shelf stable dip was prepared using the DSF powder as major acidifying agent according to the recipe described in Table 3 below. An ED composition obtained in a manner as described in Example 2 above was also used as a secondary acidifying agent in order to achieve a final target pH of 4.2 or less. The addition amount of the ED composition used was 13.1%. The dip was prepared by first mixing water, corn syrup solid, dairy protein, starch and aDSF at about 140°F followed by addition of pre-melted oil and emulsifier to form a wet mix. Homogenize the wet mix at 2000/500 psi with a 2-stage homogenizer. After adding salt, preservatives, stabilizers and ED composition from Example 2, to the homogenized wet mix, the mix was further mixed and pasteurized at 186°F for 1 minute prior to filling into a suitable container (plastic jar). Finished product pH was 4.2.

**Table 3**

| **Ingredient** | **wt%** |
|---|---|
| Water | 58.4 |
| Vegetable oil | 16.1 |
| Com Syrup Solids | 5.15 |
| Concentrated dairy protein powder | 4.22 |
| aDSF | 1.92 |
| Starch | 0.37 |
| Salt | 0.28 |
| Emulsifier | 0.14 |
| Preservative | 0.11 |
| Stabilizer | 0.11 |
| ED composition (pH=1.0)* | 13.1 |
| **Total** | 100 |
| pH | 4.2 |

| | |
|---|---|
| **ED composition generated with FIG. 3 membrane configuration.* | |

Sensory evaluation of the shelf stable dip revealed that it had no objectionable sour taste and was excellent in texture and emulsion stability.

### EXAMPLE 4: Acidic Whole Wheat Flour

An aqueous mixture comprising 323 g of whole wheat flour (Archer-Daniels-Midland Co., Decatur, IL) 500 g of de-ionized water and 9.78 g of 6.25N food grade hydrochloric acid was homogenized in a Champ HP3 high performance blender (Springfield, MO) and then freeze dried to form an acidic whole wheat flour (aWWF) powder. The powder had an acidifying power of 0.005 mole/liter per gram at pH 4.0.

A shelf stable gravy was prepared using the aWWF powder as the acidifying agents and according to the following recipe. The gravy was prepared by mixing all ingredients, indicated in Table 4 below, and heating to a temperature of 210-212°F. Heating and mixing at about 205-210°F for additional 10 minutes, then hot filling into a suitable container, followed by sealing the container and cooling to ambient temperature in a cooler. Finished product pH was 4.1.

**Table 4**

| **Ingredients** | **wt%** |
|---|---|
| All-Purpose/ Whole Wheat flour | 1.94 |
| aWWF | 3.61 |
| Butter | 5.56 |
| Water | 88.9 |
| **Total** | 100 |
| pH | 4.1 |

The resulting shelf stable gravy had no objectionable sour taste and was excellent in texture.

### EXAMPLE 5: Shelf Stable Milk Based Falling

A shelf stable milk based filling was prepared in the following manner using the ingredients in the amounts indicated in Table 5. Whole milk was mixed with aWPC using a lightening mixer. The aWPC used was prepared in following manner: about one part of commercial WPC (FDA, Minnesota) was dispersed using a shear device with 3 parts of water and slurry pH was adjusted with food grade hydrochloric acid to about 3.25 to 3.5. The slurry was heated to a temperature of about 200°F and held for about 12 minutes. After cooling, the slurry was spray dried to a dry granular form. The aWPC used had an acidifying power of about 0.22 mole/liter per gram of a WPC at pH 4.0. The wet mix obtained was heated to 150°F. AMF was melted and heated to 150°F. The melted AMF and wet mix were mixed in the lightening mixer, and then homogenized at 3000 rpm and 500 psi. The preblended gums and sugar were added to the homogenized wet mix. The resulting mixture was heated in a thermomixer to 190°F (about 10-11 minutes), and then held for 2 minutes. The resulting mixture was homogenized at 5000 rpm and 500 psi. The resulting homogenate was collected in a bowl, and cooled to a temperature below 50°F in a refrigerator (alternatively, an ice bath could be used). The cooled product was whipped in a Hobart mixer at high speed for 2 minutes. The sample was collected and cooled in a refrigerator overnight. The refrigerated product had a pH of 4.1. The food product composition contained 48.5% moisture, 17.5% fat, 7.4% protein, 17.0% sucrose, 6.2% lactose, 0.7% salt and 1.2% ash. It was creamy and had an aerated cuttable texture, and it did not have acidic taste or bite. The product was used as a filling for cookie shells, providing a stable cream-filled cookie product that did not have an acidic off-taste.

**Table 5**

| **Ingredient** | **Grams** | **wt%** |
|---|---|---|
| whale milk | 831.2 | 55.4 |
| aWPC | 168.3 | 11.2 |
| Sucrose | 225.0 | 15.0 |
| Carob | 6.0 | 17.0 |
| xanthan gum | 1.5 | 0.1 |
| Gelatin | 12.0 | 0.8 |
| sorbic acid | 0.8 | 0.05 |
| Total | | 100 |

**EXAMPLE 6: Shelf Stable Cream Cheese**

A shelf stable cream cheese was prepared in the following manner using the ingredients and the respective amounts indicated in Table 6. UF acid whey was preheated in a microwave to 140°F. Then, aWPC, which was the same as the previous example, was mixed into a slurry consisting of the warmed UF acid whey and WPC-53. Tocopherol was added into the warmed AMF (140°F) and then the melted AMF was added into the wet mix. Then, the mixture was passed through a homogenizer (twice) at 5000/500 psi. Minor ingredients (i.e, LBG/Xanthan/Inulin/sorbic acid/salt) were then added into a Thermomix food processor. The slurry was heated to 185°F and held for 10 minutes. Flavor (nature dairy flavor) was then added. The sample was homogenized using a two-stage homogenizer at 2500/500 psi. The sample was hot-filled into 8 oz. tubs. The full fat soft cream cheese product was made using 70% UF acid whey, 23.5% anhydrous milk fat, 3.8% aWPC. The finished food composition contained 62% moisture, 25.6% fat, 5.1% protein, 4.9% lactose.

**Table 6**

| **Ingredient** | **wt%** | **Grams (g)** |
|---|---|---|
| UF acid whey | 70.09 | 953.78 |
| AMF | 23.51 | 319.86 |
| aWPC | 3.84 | 52.23 |
| WPC-53 | 1.00 | 13.61 |
| Salt | 0.55 | 7.48 |
| Inulin-ST | 0.50 | 6.80 |
| Carob gum | 0.26 | 3.54 |
| Xanthan Gum | 0.1 | 1.36 |
| Sorbic acid | 0.05 | 0.68 |
| Nature dairy flavor | 0.1 | 13.61 |
| Mix Tocopherol | 0.01 | 0.1 |
| Total | 100.00 | 1360.80 |

While the invention has been particularly described with specific reference to particular process and product embodiments, it will be appreciated that various alterations, modifications and adaptations may be based on the present disclosure, and are intended to be within the spirit and scope of the present invention as defined by the following claims.

## Claims

1. A method for preparing a low-pH, high-moisture shelf-stable food composition with reduced sourness comprising preparing the food composition with a low sourness acidulant having an acidifying power of at least about 0.005 mole/liter per gram of acidulant at pH 4.0, in amount effective for providing a food composition having a final pH of 5.0 or less with an Aw of about 0.90 or greater.

2. The method of Claim 1 wherein the acidulant is selected from the group consisting of a highly acidified food ingredient, an acidic ED composition, an edible inorganic acid, an edible metal acid salt of an inorganic acid, or mixtures thereof.

3. The method of Claim 1 or 2 wherein the acidulant comprises a highly acidified food ingredient selected from the group consisting of highly acidified egg protein, highly acidified soy protein, highly acidified grain protein, and highly acidified dairy protein.

4. The method of any one of Claims 1 to 3 wherein the acidulant comprises dry acidified whey protein concentrate having an acidifying power of at least about 0.01 mole/litre per gram of the acidified whey protein concentrate at pH 4.0.

5. The method of Claim 4 wherein the acidified whey protein concentrate is prepared by combining whey protein concentrate with an acidulant selected from the group consisting of acidic ED composition, edible inorganic acid, metal acid sail of inorganic acid, or mixtures thereof, in aqueous medium to provide a mixture, and drying the mixture to provide the acidified whey protein concentrate as a dry particulate,

6. The method of Claim 5 wherein whey protein concentrate is blended with the inorganic acid and/or salt thereof in respective amounts effective for providing an acidified whey protein concentrate having a pH of about 4.2 or less.

7. The method of Claim 5 or 6 wherein the mixture is heated to a temperature greater than 170°F prior to drying.

8. The method of any one of Claims 1 to 7 wherein the acidulant comprises an acidic ED composition prepared by a process comprising:
contacting an aqueous solution having a total anion or total cation concentration of 1.8 N or less with a membrane electrodialysis system, the membrane electrodialysis system comprising at least one electrodialysis cell comprising a bipolar membrane in between a cationic membrane and an anionic membrane, wherein said at least one cell is arranged between an anode electrode and a cathode electrode; and
applying an electrical potential across the anode electrode and cathode electrode for a time effective for changing the pH of the aqueous solution by at least 2.0 and providing an electrodialyzed composition having a total anion or total cation concentration of 1.8 N or less, individual cation or anion concentration of 0.9 N or less, and a free chlorine content of 1 ppm or less.

9. The method of Claim 8 wherein the membrane electrodialysis system comprises a stack configuration selected from the group consisting of cathode electrode-(CAB)ₙC-anode electrode, cathode electrode-C(ABC)ₙ-anode electrode, cathode electrode-A(BCA)ₙ-anode electrode, and cathode electrode-(ABC)ₙ-anode electrode, where C represents a cationic membrane, A represents an anionic membrane, B represents a bipolar membrane, and n is a positive integer representing the number of cells in the stack configuration.

10. The method of any one of Claims 1 to 7 wherein the acidulant comprises an acidic ED composition prepared by a process comprising:
contacting an aqueous solution having a total anion or total cation concentration of 1.8 N or less with a membrane electrodialysis system, the membrane electrodialysis system comprising, in the following sequence, (i) a cathode electrode, (ii) at least one electrodialysis cell comprising, in this order, a cationic membrane, an anionic membrane, and a bipolar membrane, (iii) a cationic membrane, and (iv) an anode electrode; and
applying an electrical potential across the anode electrode and cathode electrode for a time effective for changing the pH of the aqueous solution by at least 2.0 and providing an electrodialyzed composition having a total anion or total cation concentration of 1.8 N or less, individual cation or anion concentration of 1.0 N or less, and a free chlorine content of 1 ppm or less.

11. The method of any one of Claims 1 to 10 wherein the acidulant comprises an inorganic acid or metal acid salt thereof selected from the group consisting of hydrochloric acid, sulfuric acid, sodium bisulfate, potassium bisulfate, calcium bisulfate, magnesium bisulfate, and mixtures thereof.

12. The method of any one of Claims 1 to 11 wherein, the food composition has a final pH of 4.6 or less.

13. The method of any one of Claims 1 to 12 wherein the food composition has a final pH of 4.2 or less.

14. The method of any one of Claims 1 to 13 wherein the prepared food composition as a total organic acid content of 0.22 moles per 1000 grams of food composition or less.

15. The method of any one of Claims 1 to 14 wherein the prepared food composition has a total organic acid content of 0.12 moles per 1000 grams of food composition or less.

16. A low-pH, high-moisture shelf-stable food composition with reduced sourness prepared by a method according to any one of Claims 1 to 15.

17. A low-pH, high-moisture shelf-stable dairy product prepared by a process comprising blending a dairy food with a highly acidified whey protein concentrate having an acidifying power of about 0.01 mole/liter per gram of the acidulant at pH 4.0, in an amount effective to provide a dairy product having a final pH of 5.0 or less with an Aw of about 0.90 or greater, wherein the highly acidified whey protein concentrate being obtained as the product of combining whey protein concentrate with an acidic ED composition, edible inorganic acid and/or metal acid salt thereof in aqueous medium to provide a mixture, and drying the mixture to provide acidified whey protein concentrate particulate.

18. A dairy product of Claim 17 comprising about 2 to about 12 weight percent highly whey protein concentrate particulate blended with the dairy food.

19. The dairy product of Claim 17 or 18 wherein whey protein concentrate particulate is blended with the dairy food in an amount effective for providing a final product pH of 4.2 or less.

20. The dairy product of any one of Claims 17 to 19 wherein the dairy food comprises mi derivative, or a combination thereof; and the dairy product is selected from the group consisting a cream filling and a cream cheese.

21. An electrodialysis method comprising:
contacting an aqueous solution having a total anion or total cation concentration of 1.8 N or less with a'membrane electrodialysis system, the membrane electrodialysis system comprising at least one electrodialysis cell comprising a bipolar membrane in between a cationic membrane and an anionic membrane, wherein said at least one cell is arranged between an anode electrode and a cathode electrode; and
applying an electrical potential across the anode electrode and cathode electrode for a time effective for changing the pH of the aqueous solution by at least 2.0 and providing an electrodialyzed composition having a total anion or total cation concentration of 1.8 N or or less, individual cation or anion concentrations of 1.0 N or less, and a free chlorine content of 2 ppm or less.

22. An electrodialyzed composition suitable for human consumption prepared by a process comprising contacting an aqueous solution having a total anion or total cation concentration of 1.8 N or less with a membrane electrodialysis system, the membrane electrodialysis system comprising, in the following sequence, (i) a cathode electrode, (ii) at least one electrodialysis cell comprising, in this order, a cationic membrane, an anionic membrane, and a bipolar membrane, (iii) a cationic membrane, and (iv) an anode electrode; and applying an electrical potential across the anode electrode and cathode electrode for a time effective for changing the pH of the aqueous solution by at least 2.0 and providing an electrodialyzed composition having a total anion or total cation concentration of 1.8 N or less, individual cation or anion concentrations of 1.0 N or less, and a free chlorine content of 2 ppm or less.
